# EUROPÄISCHE PATENTSCHRIFT

(11) **EP 2 444 285 B1**
(45) Veröffentlichungstag und Bekanntmachung des Hinweises auf die Patenterteilung: **28.08.2013**
(21) Anmeldenummer: 11466031.9
(22) Anmeldetag: 17.10.2011
(51) Int. Cl.: B60R 5/04

(54) **Höhenverstellbarer Ladeboden**
Height-adjustable loading floor
Sol de chargement réglable en hauteur

(30) Priorität: 21.10.2010 CZ 20100768
(43) Veröffentlichungstag der Anmeldung: 25.04.2012
(73) Patentinhaber: Skoda Auto A.S., 293 60 Mladá Boleslav (CZ)
(72) Erfinder: Baloun, Jan, 66471 Veverská Bityska (CZ)

(56) Entgegenhaltungen:
- JP-A- 2002 370 677
- JP-A- 2008 037 299
- US-A1- 2010 090 502

## Beschreibung

### Technisches Gebiet

Die Erfindung betrifft einen höhenverstellbaren Ladeboden, insbesondere einen Ladeboden für den Fahrzeugkofferraum, wobei der Ladeboden von einer unteren Position in eine obere Position verstellbar ist.

### Bisheriger Stand der Technik

Derzeit sind verschiedene Ausführungen des durch eine zusätzliche verstellbare Bodenplatte ausgebildeten erhöhten Ladebodens im Kofferraum bekannt. Diese Bodenplatte wird mit ihrem vorderen Abschnitt z.B. in einer Kulissenführung geführt oder in einer Kurbelaufhängung gelagert, was die Abstützung dieses Abschnittes sowohl in der unteren, wie auch in der oberen Position der Platte sicherstellt. Der hintere Abschnitt der Platte liegt in der unteren Position direkt an der Auflagefläche unter dem Ladeboden, in der Regel auf dem Fahrzeugunterboden, und in der oberen Position wird er mit den Vorsprüngen abgestützt, die am Umfang des Kofferraumes, insbesondere an der Seitenverkleidung oder an der Verkleidung der Ladekante ausgebildet sind. Solche Lösungen sind zum Beispiel in den Dokumenten EP1728684 oder DE 102007042371 beschrieben. In diesen Fällen weist die Bodenplatte im hinteren Abschnitt eine Aussparung oder einen Griff zum Ergreifen durch die Bedienperson beim Anheben und Verstellen des Ladebodens aus der unteren in die obere Position auf. Der Griff wird manchmal ausklappbar an der Oberseite des Ladebodens befestigt, damit er beim Nichtgebrauch nicht hinderlich wird, jedoch ein festes und sicheres Ergreifen durch die Bedienperson ermöglicht.

Solche Lösung hat den Nachteil, dass die Bedienperson beim Anheben des Ladebodens, insbesondere bei ausgedehnten Ladeböden mit schwerer Bodenplatte, auf den Griff mit großer Kraft senkrecht nach oben einwirken muss.

Weiter sind aus dem dem Stand der Technik das gattungsbildende Dokument JP 2002 370677 A und das Dokument US 2010/0090502 A1 bekannt. Die offenbaren vor allem den höhenverstellbaren

Ladeboden, der zwischen einer unteren und einer oberen Position verstellbar ist und einen schwenkbaren Griff und eine Stütze aufweist. Der Griff ist mit der Stütze kinematisch mittels einer Zugstange verbunden.

### Darstellung der Erfindung

Die Aufgabe wird durch einen erfindungsgemäßen höhenverstellbaren Ladeboden des Fahrzeugkofferraumes gemäβ Anspruch 1 gelöst.

Der Ladeboden kann zwischen unteren Position und oberen erhöhten Position verstellt werden. An der Oberseite weist der Ladeboden einen schwenkbar angebrachten Griff auf. Von der Unterseite ist zum Ladeboden ausklappbar eine Stütze befestigt, wobei der Griff mit dieser Stütze kinematisch mittels mindestens einer Zugstange verbunden ist. Beim Bewegen des Griffs wird zugleich auch die Stütze bewegt. Beim Verstellen des Ladebodens aus der unteren Position in die obere Position hebt die Bedienperson den Ladeboden an dem Griff an, wobei dieser dabei verschwenkt und seine Bewegung mittels der Zugstange an die Stütze übertragen wird, welche unter die Bodenplatte ausgeklappt wird. Die Stütze stützt sich an der Auflagefläche unter der Bodenplatte ab, in der Regel an dem Unterboden oder an einer zusätzlich ausgebildeten waagerechten Fläche, und hebt beim weiteren Ausklappen die Bodenplatte an.

Der Griff ist gemäß der Erfindung als ein einseitiger Hebel ausgeführt, dessen ein Ende zur Bodenplatte befestigt und das andere Ende für das Ergreifen durch die Bedienperson angepasst ist. Die Stütze hat dann die Gestalt eines zweiseitigen Hebels, wobei zum ersten Schenkel eine Zugstange angeschlossen ist und der zweite Schenkel für den Kontakt mit der Auflagefläche angepasst ist, an der die Bodenplatte in ihrer unteren Position abgestützt wird. Dank dessen wird beim Verschwenken des Griffes um 180° die Stütze um 90° ausgeklappt.

In einer vorteilhaften Ausführung ist der Griff mit einem ersten Scharnier und die Stütze mit einem zweiten Scharnier zur Bodenplatte befestigt, wobei beide Scharniere horizontale quergelagerte Drehachsen haben und die Achse des erstens Scharniers über der Achse des zweiten Scharniers liegt. Dadurch kann eine ideale Kinematik des gesamten Mechanismus erzielt werden.

Die Länge der Zugstange ist vorteilhaft im Wesentlichen gleich wie die Distanz des ersten und zweiten Scharniers, und dabei ist die Entfernung vom ersten Scharnier zur Anbindungsstelle des Zugstange zum Griff und die Entfernung vom zweiten Scharnier zur Anbindungsstelle der Zugstange zur Stütze im Wesentlichen gleich und mit der Länge der Zugstange identisch. In der unteren Position des Ladebodens bilden die Drehpunkte des Mechanismus im Wesentlichen ein Quadrat, während sie in der oberen Position des Ladebodens die Form L bilden.

Um das Umklappen der Stütze aus der im Wesentlichen aufrechter Stellung in der oberen Position des Ladebodens zu vereinfachen kann die Entfernung vom ersten Scharnier zur Anbindungsstelle der Zugstange zum Griff im Wesentlichen gleich wie die Entfernung des erstens und zweitens Scharniers und die Länge der Zugstange sowie die Entfernung vom zweiten Scharnier zur Anbindungsstelle der Zugstange zur Stütze dabei größer als die Entfernung des erstens und zweitens Scharniers sein. Dank der Längendifferenz liegt die Anbindungsstelle der Zugstange zur Stütze in der oberen Position des Ladebodens außerhalb der Achse des erstens Scharniers sodass die Stütze beim Anheben des Griffes sofort bewegt wird.

Der Griff oder die Stütze können eine Rückfeder für die Rücksetzung in die der unteren Position des Ladebodens entsprechende Lage, also für das Einklappen der Stütze in die Ebene des Ladebodens, aufweisen. Dadurch wird insbesondere das Einklappen der Stütze beim Verstellen des Ladebodens aus der oberen in die untere Position vereinfacht.

### Übersicht der Figuren der Zeichnungen

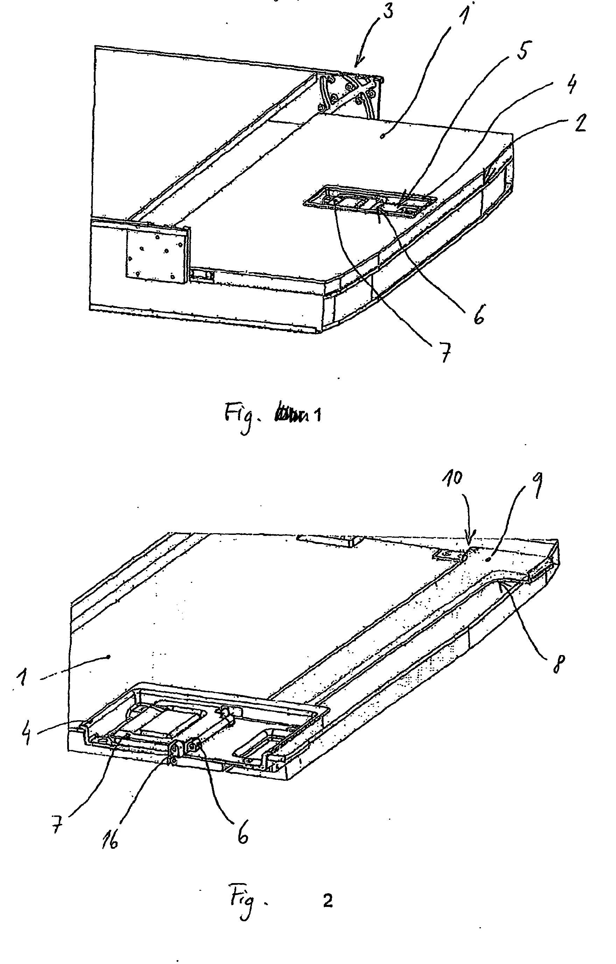

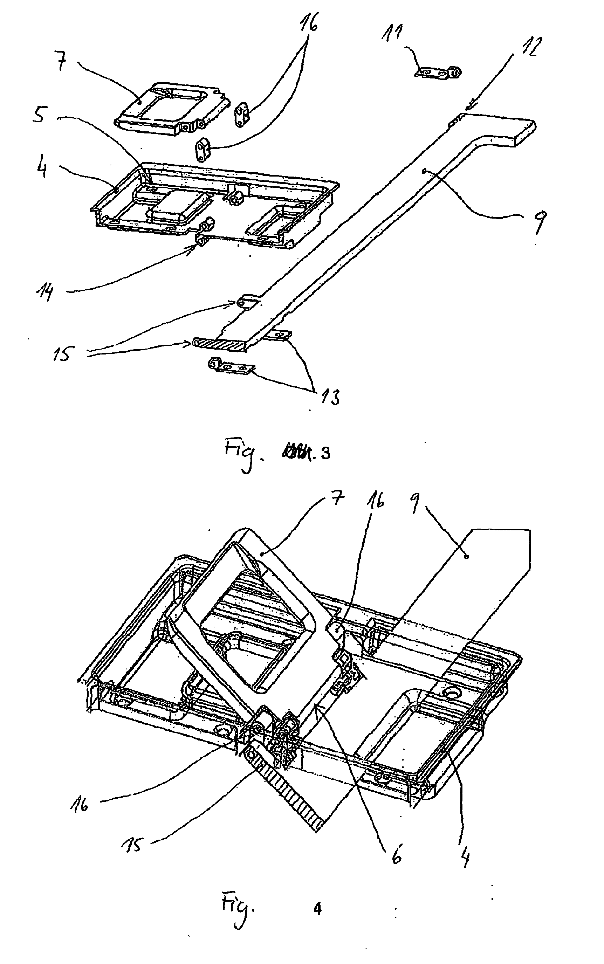

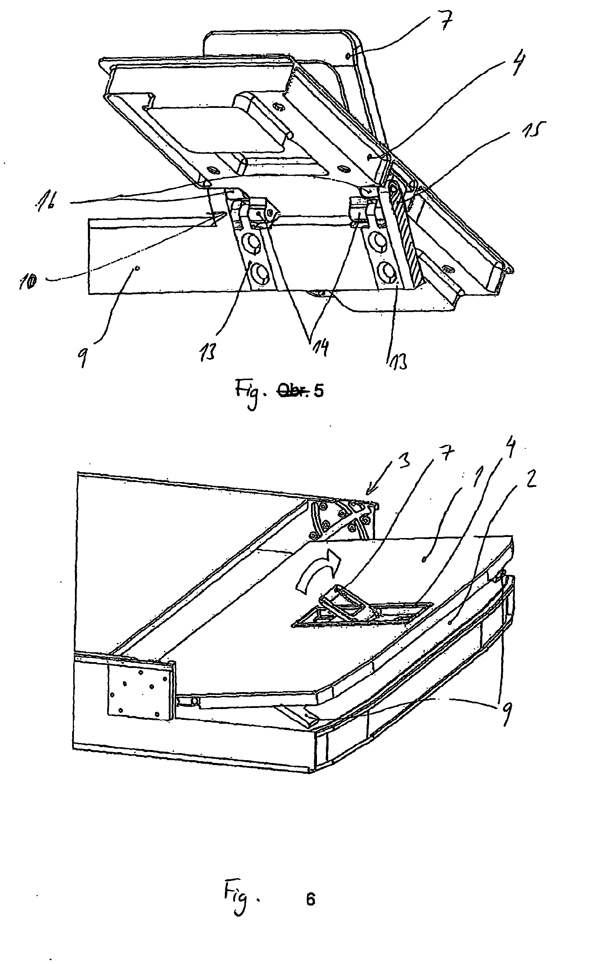

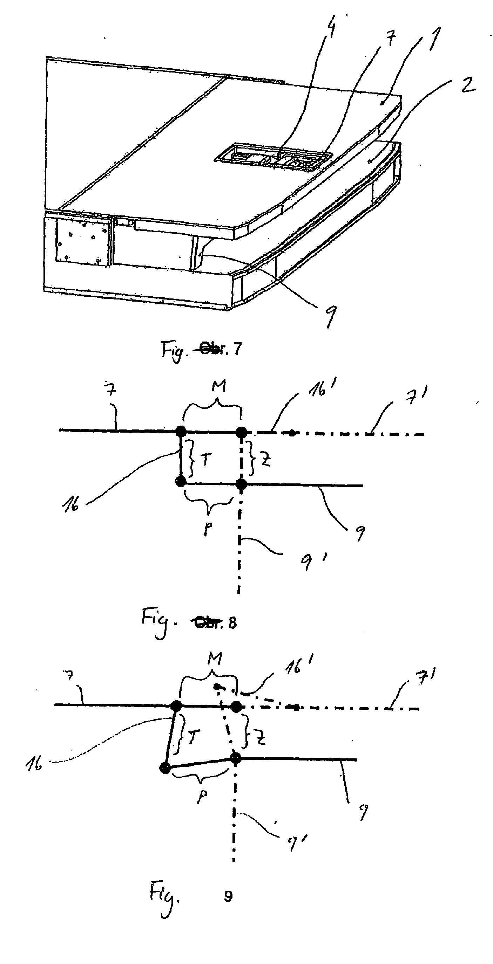

In der Fig. 1 ist die Ansicht der Bodenplatte in der unteren Position, in Fig. 2 ein Schnitt in dieser Position dargestellt. Die Fig. 3 und Fig. 4 stellen den Mechanismus des Griffes und der Stütze in perspektivischen Ansichten von oben und unten dar. In der Fig. 5 ist in einer Explosionszeichnung der Mechanismus des Griffes und der Stütze dargestellt. In der Fig. 6 ist der Ladeboden bei der Verstellung zwischen den Positionen und in der Fig. 7 der Ladeboden in der oberen Position dargestellt.

In der Fig. 8 ist schematisch der Mechanismus des Griffes und der Stütze nach dem ersten erfindungsgemäßen Ausführungsbeispiel, in der Fig. 9 nach dem zweiten erfindungsgemäßen Ausführungsbeispiel dargestellt.

### Ausführungsbeispiele der Erfindung

In der Fig. 1 ist ein Teil des Fahrzeugkofferraumes mit einem erfindungsgemäßen höhenverstellbaren Ladeboden in der oberen Position dargestellt. Der Ladeboden 1 ist mit seinem vorderen Abschnitt in einem näher nicht spezifizierten Kulissenmechanismus 3 geführt und liegt mit seiner Unterseite auf dem Unterboden 2. Im hinteren, der Laderaumöffnung des Kofferraumes zugewandten Ladebodenabschnitt ist in dem Ladeboden eine Einsenkung ausgebildet, in der ein Halter 4 eingesetzt ist. Der Halter **4** bildet mit seinem oberen Rand im Wesentlichen eine ebene Fläche mit der Oberseite des Ladebodens **1** und weist eine Formaussparung **5** auf. Zum Halter **4** ist von der Oberseite mittels des erstens Scharniers **6** schwenkbar der Griff **7** angeschlossen, der sich horizontal nach vorne vom ersten Scharnier **6** erstreckt. Der Griff **7** liegt in der Aussparung **5** und erhebt sich somit nicht über die obere Fläche des Ladebodens **1.**

In der Fig. **2** ist ein Schnitt des Ladebodens **1** in der unteren Position dargestellt. Im Ladeboden **1** ist unter dem Halter **4** eine Öffnung ausgebildet, durch die der Halter **4** von der Unterseite des Ladebodens **1** zugänglich ist. An der Unterseite des Ladebodens **1** ist eine Aussparung **8** ausgebildet, in der sich die Stütze 9 befindet, die schwenkbar von unten mit dem Halter **4** und mit dem Ladeboden 1 mittels des zweiten Scharniers **10** verbunden ist. Aus der Fig. 3 ist die Ausführung des Hebemechanismus ersichtlich. Die Stütze **9** erstreckt sich entlang der ganzen Breite des Ladebodens **1** und ist an ihren Enden in die Stützbeine ausgeformt. Der Scharnier 10 wird gebildet durch die zum Ladeboden **1** in seinen Randbereichen angeschraubten Angel **11,** die mittels näher nicht abgebildeten Bolzen mit den an der Stütze 9 ausgebildeten Ösen **12** verbunden sind, und durch die zur Stütze **9** in ihrer Mitte angeschraubten Angel **13,** die mittels näher nicht abgebildeten Bolzen schwenkbar mit den von unten am Halter **4** ausgebildeten Ösen **14** verbunden sind. Von der Stütze **9** ragen vor das Scharnier **10** die Schenkel **15** heraus, mit denen schwenkbar die Zugstangen **16** verbunden sind. Die Zugstangen führen durch die Öffnungen im Halter **4** nach oben hin und sind schwenkbar mit dem Griff **7** verbunden.

In der Fig. **4** und Fig. **5** ist der Mechanismus beim Anheben des Ladebodens **1** dargestellt, in Fig. 6 ist dann der gesamte Ladeboden in dieser Position angezeigt. Nach dem Ergreifen des Griffes **7** durch die Bedienperson beginnt der Griff **7** sich anzuheben und um das erste Scharnier **6** zu verschwenken. Die Bewegung des Griffes **7** wird mittels der Zugstangen **16** auf die Schenkel **15** der Stütze **9** übertragen, die sich um das zweite Scharnier **10** nach unten vom Ladeboden **1** auszuklappen beginnt. Die Stütze **9** stützt sich mit ihren Enden vom Unterboden **2** ab und hebt den Ladeboden **1** nach oben an.

Die Länge der Zugstangen **16** soll so gewählt werden, damit nach dem Verschwenken des Griffes **7** um 90° in die aufrechte Position die Stütze **9** im Wesentlichen um 90° ausgeklappt wird. In diesem Moment nähert sich der Punkt der Verbindung der Zugstange **16** am Schenkel **15** der Stütze **9** zum ersten Scharnier 6 und die Stütze **9** wird beim weiteren Verschwenken des Griffes 7 nur minimal, bzw. abhängig von der gewählten Verhältnissen im Mechanismus gar nicht weiter ausgeklappt. Der Griff **7** kann so in die waagerechte Lage nach hinten umgeklappt werden, wo er in die Aussparung **5** des Halters **4** einsinkt und über die obere Fläche des Ladebodens **1** nicht herausragt. Der Ladeboden ist in dieser Position im hinteren Abschnitt durch die Stütze **6** abgestützt, die im Wesentlichen aufrecht steht und sich an dem Unterboden **2** abstützt.

In der Fig. **8** ist das erste Ausführungsbeispiel der Geometrie des erfindungsgemäßen Hebemechanismus des Ladebodens in der unteren Position des Ladebodens **1** dargestellt. Die Lage des Mechanismus in der oberen Position des Ladebodens **1** ist mit der strichpunktierten Linie dargestellt, wobei die Teilepositionen in dieser Position mit einem Strich indexiert sind. Die Länge **T** der Zugstange **16** ist gleich wie die Entfernung **Z** des ersten Scharniers **6** und des zweitens Scharniers **10.** Die Distanz **M** vom ersten Scharnier **6** zur Anbindungsstelle der Zugstange **16** zum Griff 7 entspricht der Entfernung **P** vom zweiten Scharnier **10** zur Anbindungsstelle der Zugstange **16** zur Stütze **9** und dabei sind diese Längen mit der Länge **T** der Zugstange **16** identisch. Nach dem Verschwenken das Griffes **7** um 90° nach hinten koinzidiert die Anbindungsstelle der Zugstange **16** zur Stütze **9** mit dem ersten Scharnier **6** und weiteres Verschwenken des Griffes **7** nach hinten wird die Position der Stütze **9** weiter nicht verändern, da sich die Zugstange **16** um die gleiche Achse wie der Griff **7** verschwenkt. Um den Ladeboden **1** in die untere Position zurückzusetzen, verschwenkt die Bedienperson den Griff **7** nach vorne, wird jedoch die Stütze **9** nicht verschwenkt, hat das Verschwenken des Griffes **7** kein Einfluss auf ihre Position. Deshalb ist günstig die Stütze **9** mit einer nicht dargestellten Rückfeder zu versehen, die sie in die Position zurücksetzt, welche der unteren Position des Ladebodens **1** entspricht, also die Stütze **9** in die Ebene des Ladebodens **1** umklappt. Die Funktion der Feder kann auch durch eine selbsttätige Teilumklappung der Stütze **9** nach dem Anheben des Ladebodens **1** und dessen Absenkung im vorderen Abschnitt und Abstützung der Stütze **9** in der Schräglage am Unterboden **2** oder auch durch die Wahl einer Endwinkellage der Stütze **9** gegenüber dem Ladeboden **1** kleiner als 90° ersetzt werden.

In der Fig. 9 ist das zweite Ausführungsbeispiel der Geometrie des erfindungsgemäßen Hebemechanismus des Ladebodens in der unteren Position des Ladebodens **1** dargestellt, das das Einklappen der Stütze **9** aus ihrer ausgeklappten Position bei oberer Position des Ladebodens erleichtert. Die Lage des Mechanismus bei der oberen Position des Ladebodens **1** ist strichpunktiert dargestellt, wobei die Teilepositionen in dieser Position mit einem Strich indexiert sind. Die Länge **M** vom ersten Scharnier **6** zur Anbindungsstelle der Zugstange **16** zum Griff **7** ist gleich wie die Länge **Z** des ersten Scharniers **6** und des zweiten Scharniers **10,** jedoch die Länge **T** der Zugstange **16** und die Länge **P** vom zweiten Scharnier **10** zur Anbindungsstelle der Zugstange **16** zur Stütze **9** größer als die Länge **Z** sind. Die Stütze 9 ist also als leicht gebrochener Hebel ausgebildet, wodurch sie in der unteren Position des Ladebodens **1** mit seiner Unterseite ebene Fläche bildet. Infolge solcher Geometrie koinzidiert die Anbindungsstelle der Zugstange **16** zur Stütze **9** nicht mit dem ersten Scharnier **6** und die Stütze **9** ändert ihre Position während des ganzen Verschwenkvorganges des Griffes **7.** Nach dem Verschwenken des Griffes **7** vorwärts aus seiner hinteren waagerechten Position beginnt die Stütze sich sofort in ihre waagerechte Position umzuklappen.

Im gesamten Dokument werden die Richtungen und Positionen entsprechend den üblich genutzten Richtungen und Positionen der Teile im Fahrzeug angeführt.

### Gewerbliche Anwendbarkeit

Der erfindungsgemäße höhenverstellbare Ladeboden ist bei Fahrzeugen, insbesondere bei Fahrzeugen mit variablem Kofferraum anwendbar.

## Patentansprüche

1. Höhenverstellbarer Ladeboden, insbesondere ein Ladeboden für den Fahrzeuqkofferraum, der zwischen einer unteren Position und einer oberen Position verstellbar ist und an der Oberseite des Ladebodens (1) einen schwenkbar angebrachten Griff 7 aufweist wobei der Ladeboden 1 an der Unterseite eine ausklappbar befestigte Stütze (9) aufweist, wobei der Griff (7) mit der Stütze (9) kinematisch mittels mindestens einer Zugstange (16) verbunden ist, **dadurch gekennzeichnet, dass** der Griff (7) als ein einseitiger Hebel ausgeführt ist, dessen ein Ende zum Ladeboden (1) befestigt ist und das andere Ende für das Ergreifen durch die Bedienperson angepasst ist, und dass die Stütze (9) die Gestalt eines zweiseitigen Hebels hat, wobei zu seinem ersten Schenkel die Zugstange (16) angeschlossen ist und der zweite Schenkel für den Kontakt mit der Auflagefläche (2) angepasst ist, an der sich der Ladeboden (1) in seiner unteren Position abstützt.

2. Höhenverstellbarer Ladeboden nach Anpruch 1
**dadurch gekennzeichnet, dass** der Griff (7) am Ladeboden (1) mittels eines erstens Scharniers (6) und dass die Stütze (9) am Ladeboden (1) mittels des zweitens Scharniers (10) befestigt ist, wobei beide Scharniere (6,10) horizontale quergelagerte Drehachsen haben und wobei die die Achse des erstens Scharniers (6) über der Achse des zweiten Scharniers (10) liegt.

3. Höhenverstellbarer Ladeboden nach Anspruch 2 **dadurch gekennzeichnet, dass** die Länge (T) der Zugstange (16) vorteilhaft im Wesentlichen gleich wie die Distanz (Z) des ersten Scharniers (6) und des zweiten Scharniers (10), und dabei ist die Entfernung (M) vom ersten Scharnier (6) zur Anbindungsstelle der Zugstange (16) zum Griff (7) und die Entfernung (P) vom zweiten Scharnier (10) zur Anbindungsstelle der Zugstange (16) zur Stütze (9) im Wesentlichen gleich und mit der Länge (T) der Zugstange (16) identisch.

4. Höhenverstellbarer Ladeboden nach Anspruch 2 **dadurch gekennzeichnet, dass** die Entfernung (M) vom ersten Scharnier (6) zur Anbindungsstelle der Zugstange (16) zum Griff (7) im Wesentlichen gleich wie die Entfernung (Z) des erstens Scharniers (6) und des zweiten Scharniers (10) ist und dass die Länge (T) der Zugstange (16) und die Entfernung (P) vom zweiten Scharnier (10) zur Anbindungsstelle der Zugstange (16) zur Stütze (9) größer als die Entfernung (Z) des ersten Scharniers (6) und des zweiten Scharniers (10) ist.

## Claims

1. Height-adjustable loading floor, in particular a loading floor for the vehicle luggage compartment, which is adjustable between a lower position and an upper position and has a pivotably mounted handle (7) on the upper side of the loading floor (1), wherein the loading floor (1) has on the underside a support (9) which is fastened such that it can be swung out, wherein the handle (7) is kinematically connected to the support (9) by means of at least one connecting rod (16), **characterized in that** the handle (7) is designed as a one-sided lever of which one end is fastened to the loading floor (1) and the other end is adapted for grasping by the operator, and **in that** the support (9) has the form of a two-sided lever, wherein the connecting rod (16) is connected to the first leg of said lever, and the second leg is adapted for contact with the bearing surface (2) on which the loading floor (1) is supported in its lower position.

2. Height-adjustable loading floor according to Claim 1, **characterized in that** the handle (7) is fastened to the loading floor (1) by means of a first hinge (6) and **in that** the support (9) is fastened to the loading floor (1) by means of the second hinge (10), wherein both hinges (6, 10) have horizontal transversely mounted axes of rotation and wherein the axis of the first hinge (6) is situated above the axis of the second hinge (10).

3. Height-adjustable loading floor according to Claim 2, **characterized in that** the length (T) of the connecting rod (16) is advantageously substantially the same as the spacing (Z) of the first hinge (6) and the second hinge (10), and at the same time the distance (M) from the first hinge (6) to the point of attachment of the connecting rod (16) to the handle (7) and the distance (P) from the second hinge (10) to the point of attachment of the connecting rod (16) to the support (9) is substantially the same and identical to the length (T) of the connecting rod (16).

4. Height-adjustable loading floor according to Claim 2, **characterized in that** the distance (M) from the first hinge (6) to the point of attachment of the connecting rod (16) to the handle (7) is substantially the same as the distance (Z) of the first hinge (6) and the second hinge (10), and **in that** the length (T) of the connecting rod (16) and the distance (P) from the second hinge (10) to the point of attachment of the connecting rod (16) to the support (9) is greater than the distance (Z) of the first hinge (6) and the second hinge (10).

## Revendications

1. Sol de chargement réglable en hauteur, en particulier sol de chargement pour le compartiment à bagages du véhicule, qui peut être réglé entre une position inférieure et une position supérieure, et qui présente, au niveau du côté supérieur du sol de chargement (1), une poignée (7) montée de manière pivotante, le sol de chargement (1) présentant, au niveau du côté inférieur, un appui (9) fixé de manière rabattable, la poignée (7) étant connectée de manière cinématique à l'appui (9) au moyen d'au moins une tige de traction (16), **caractérisé en ce que** la poignée (7) est réalisée sous forme de levier unilatéral, dont une extrémité est fixée au sol de chargement (1) et dont l'autre extrémité est adaptée pour être saisie par l'opérateur, et **en ce que** l'appui (9) a la forme d'un levier bilatéral, à la première branche duquel se raccorde la tige de traction (16) et dont la deuxième branche est adaptée pour venir en contact avec la surface d'appui (2) sur laquelle s'appuie le sol de chargement (1) dans sa position inférieure.

2. Sol de chargement réglable en hauteur selon la revendication 1, **caractérisé en ce que** la poignée (7) est fixée au sol de chargement (1) au moyen d'une première charnière (6) et **en ce que** l'appui (9) sur le sol déchargement (1) est fixé au moyen de la deuxième charnière (10), les deux charnières (6, 10) ayant des axes de rotation horizontaux montés transversalement et l'axe de la première charnière (6) étant situé au-dessus de l'axe de la deuxième charnière (10).

3. Sol de chargement réglable en hauteur selon la revendication 2, **caractérisé en ce que** la longueur (T) de la tige de traction (16) est avantageusement essentiellement égale à la distance (Z) de la première charnière (6) et de la deuxième charnière (10), et l'espacement (M) de la première charnière (6) au point de liaison de la tige de traction (16) à la poignée (7) et l'espacement (P) de la deuxième charnière (10) au point de liaison de la tige de traction (16) à l'appui (9) sont essentiellement identiques et sont identiques à la longueur (T) de la tige de traction (16).

4. Sol de chargement réglable en hauteur selon la revendication 2, **caractérisé en ce que** l'espacement (M) de la première charnière (6) au point de liaison de la tige de traction (16) à la poignée (7) est essentiellement identique à l'espacement (Z) de la première charnière (6) et de la deuxième charnière (10) et **en ce que** la longueur (T) de la tige de traction (16) et l'espacement (P) de la deuxième charnière (10) au point de liaison de la tige de traction (16) à l'appui (9) sont supérieurs à l'espacement (Z) de la première charnière (6) et de la deuxième charnière (10).
